# EUROPÄISCHE PATENTSCHRIFT

(11) **EP 2 687 822 B1**
(45) Veröffentlichungstag und Bekanntmachung des Hinweises auf die Patenterteilung: **09.01.2019**
(21) Anmeldenummer: 13168915.0
(22) Anmeldetag: 23.05.2013
(51) Int. Cl.: G01D 5/245, G01D 5/347

(54) **Positionsmesseinrichtung**
Position measuring device
Dispositif de mesure de position

(30) Priorität: 20.07.2012 DE 102012212767
(43) Veröffentlichungstag der Anmeldung: 22.01.2014
(73) Patentinhaber: Dr. Johannes Heidenhain GmbH, 83301 Traunreut (DE)
(72) Erfinder: Rosenlehner-Emde, Jannik Jens, 83119 Obing (DE)

(56) Entgegenhaltungen:
- EP-A1- 1 102 039
- EP-A1- 2 416 126
- EP-B1- 1 468 254
- DE-A1-102006 007 184

## Beschreibung

Die Erfindung betrifft eine Positionsmesseinrichtung zur Bestimmung der absoluten Position.

Auf vielen Gebieten werden vermehrt absolute Positionsmesseinrichtungen eingesetzt, bei denen die absolute Positionsinformation aus einer Codespur mit in Messrichtung hintereinander angeordneten Codeelementen abgeleitet wird. Die Codeelemente sind dabei in pseudozufälliger Verteilung vorgesehen, so dass eine bestimmte Anzahl von aufeinander folgenden Codeelementen jeweils ein Bitmuster bildet. Bei der Verschiebung der Abtasteinrichtung gegenüber der Codespur um ein einziges Codeelement wird bereits ein neues Bitmuster gebildet und über den gesamten absolut zu erfassenden Messbereich steht eine Folge von unterschiedlichen Bitmustern zur Verfügung.

Ein derartiger sequentieller Code wird als Kettencode oder als Pseudo-Random-Code (PRC) bezeichnet. Dabei kann jedes Codeelement aus einem einzigen Bereich oder aus zwei Teilbereichen bestehen, die zueinander komplementäre Eigenschaften aufweisen. Die zwei Teilbereiche können seriell in einer Spur angeordnet sein, wie beispielsweise in der DE 10 2006 007 184 A1 und der EP 1 468 254 B1 gezeigt, oder die zwei Teilbereiche können in zwei parallen Spuren untereinander angeordnet sein, wie in der EP 1 102 039 A1 gezeigt.

Eine absolute Positionsmesseinrichtung, von der diese Erfindung ausgeht, ist in der EP 2 416 126 A1 beschrieben. Gemäß dem dort in Figur 3 offenbarten Ausführungsbeispiel weist die Positionsmesseinrichtung einen Codeträger mit einer Codespur auf, die aus einer Folge von in Messrichtung hintereinander angeordneten Codeelementen besteht. In einer parallel zur Codespur angeordneten Spur ist eine periodische Inkrementalteilung angeordnet. Detektoren einer Abtasteinrichtung tasten jeweils gemeinsam die Codespur und die Inkrementalteilung ab und erzeugen somit ein gemeinsames Abtastsignal aus den beiden Spuren. Dieses Abtastsignal wird einer Auswerteeinheit zugeführt, die daraus eine Codeinformation und ein periodisches Inkrementalsignal bildet.

Nachteilig dabei ist der relativ geringe Modulationsgrad der Abtastsignale und die relativ aufwendige Auswertung.

Der Erfindung liegt die Aufgabe zugrunde, eine absolute Positionsmesseinrichtung zu schaffen, mit der auf einfache Weise eine korrekte absolute Position mit hoher Zuverlässigkeit sowie zumindest ein periodisches Inkrementalsignal erzeugbar ist.

Diese Aufgabe wird durch die Merkmale des Anspruches 1 gelöst. Demnach umfasst die Positionsmesseinrichtung
- einen Codeträger mit
   - einer Folge von Codeelementen, wobei jedes Codeelement aus einem ersten Teilbereich und einem zweiten Teilbereich besteht, die zueinander komplementäre Eigenschaften aufweisen, und
   - einer periodischen Inkrementalteilung;
- eine Abtasteinrichtung mit mehreren Detektoren,
   - wobei ein erster Detektor zur gemeinsamen Abtastung des ersten Teilbereichs eines der Codeelemente sowie der Inkrementalteilung ausgebildet ist und dadurch ein erstes Abtastsignal erzeugbar ist und
   - wobei ein zweiter Detektor zur gemeinsamen Abtastung des zweiten Teilbereichs des einen Codeelementes sowie der Inkrementalteilung ausgebildet ist und dadurch ein zweites Abtastsignal erzeugbar ist;
- eine Auswerteeinheit, welcher das erste Abtastsignal und das zweite Abtastsignal zugeführt sind und die dazu ausgebildet ist, daraus eine Codeinformation für das Codeelement zu bilden und die dazu ausgebildet ist das erste Abtastsignal (A1) und das zweite Abtastsignal (A2) miteinander zu kombinieren, um ein periodisches Inkrementalsignal (I1) zu bilden.

Die Ausgestaltung der Codeelemente wird in bekannter Weise abhängig vom Abtastprinzip gewählt. So können die Codeelemente optisch, magnetisch, kapazitiv oder induktiv abtastbar ausgestaltet sein. Entsprechend der Ausgestaltung der Codeelemente werden auch die Detektoren gewählt.

Komplementäre Eigenschaften bedeutet dabei, dass die Teilbereiche der Codeelemente inverse Eigenschaften besitzen, so dass diese bei der Abtastung Abtastsignale bilden, die invers zueinander verlaufen. Die damit erzeugten Abtastsignale innerhalb eines Codeelementes werden daher auch Taktsignal und Gegentaktsignal bezeichnet.

Zur besonders vorteilhaften optischen Abtastung weisen die zwei Teilbereiche eines Codeelementes jeweils zueinander komplementäre optische Eigenschaften auf, bei Durchlicht-Abtastung somit transparente und nicht transparente bzw. bei Auflicht-Abtastung reflektierende bzw. nicht reflektierende Teilbereiche.

Zur Bildung der Codeinformation und des periodischen Inkrementalsignal werden das erste Abtastsignal und das zweite Abtastsignal der Auswerteeinheit zugeführt. Die Abtastsignale können von der Auswerteeinheit als analoge Signale in Form von Strömen oder Spannungen verarbeitet werden. Alternativ können die Abtastsignale von der Auswerteeinheit als digitale Werte in Form von mehrstelligen Wörtern (n Bits, mit n>1) verarbeitet werden, wozu die von den Detektoren erzeugten analogen Abtastsignale vor der Verarbeitung A/D-gewandelt werden.

Das periodische Inkrementalsignal wird vorzugsweise von der Auswerteeinheit durch Addition des ersten Abtastsignals und des zweiten Abtastsignals gebildet. Dadurch wird ein periodisches Inkrementalsignal gewonnen, das innerhalb einer Periode gut interpolationsfähig ist, wodurch genaue absolute Zwischenwerte innerhalb einer Periode und somit innerhalb der Länge eines Codeelementes gebildet werden können.

Die Abfolge der zueinander komplementär ausgebildeten Teilbereiche eines Codeelementes bestimmt die Codeinformation des jeweiligen Codeelementes. Einer ersten Abfolge wird ein erster binärer Wert und einer zweiten Abfolge ein zweiter binärer Wert zugeordnet.

Die Codeinformation wird vorzugsweise durch Vergleich des ersten Abtastsignals mit dem zweiten Abtastsignal gebildet, insbesondere durch Bilden der Differenz, in besonders vorteilhafter Weise durch Subtraktion des zweiten Abtastsignals vom ersten Abtastsignal. Erfolgt in der Auswerteeinheit eine analoge Signalverarbeitung, sind die miteinander zu vergleichenden Abtastsignale Ströme oder Spannungen, die mittels eines Komparators verglichen werden. Erfolgt in der Auswerteeinheit eine digitale Signalverarbeitung, sind die miteinander zu vergleichenden Abtastsignale digitale Werte, die mittels eines Komparators verglichen werden, wobei in diesem Fall am Ausgang des Komparators die Codeinformation direkt als Digitalwert (ein Bit) zur Verfügung steht.

Die zwei zueinander komplementären Teilbereiche der Codeelemente können bei der Erfindung in separaten zueinander parallel verlaufenden Codespuren angeordnet sein oder alternativ in einer gemeinsamen Codespur, indem die ersten Teilbereiche der Codeelemente und die zweiten Teilbereiche der Codeelemente jeweils in Messrichtung aufeinanderfolgend angeordnet sind.

Bei beiden Anordnungen ist es nun vorteilhaft, wenn die Inkrementalteilung und / oder die Codespur in mehrere gleiche parallel und fluchtend zueinander angeordnete Teilspuren aufgeteilt ist bzw. sind. Dadurch ist es möglich, senkrecht zur Messrichtung symmetrische Spuranordnungen zu erhalten. Wenn bei diesen symmetrischen Spuranordnungen die Ausdehnung der Detektoren senkrecht zur Messrichtung kleiner gewählt wird wie die Spuranordnung, entsteht für die Abtasteinrichtung in einer Richtung senkrecht zur Messrichtung, also in Strichrichtung der Inkrementalteilung, ein relativ großer Toleranzbereich in dem eine Relativbewegung gegenüber dem Codeträger möglich ist, ohne dass eine Modulation der Abtastsignale resultiert.

Weitere vorteilhafte Ausgestaltungen der Erfindung sind in den abhängigen Ansprüchen angegeben.

Die Erfindung wird anhand der Zeichnungen näher erläutert, dabei zeigen:
- Figur 1: eine erste Positionsmesseinrichtung in schematischer Darstellung;
- Figur 2: ein erstes Abtastsignal der Positionsmesseinrichtung gemäß Figur 1;
- Figur 3: ein zweites Abtastsignal der Positionsmesseinrichtung gemäß Figur 1;
- Figur 4: ein aus den Abtastsignalen gewonnenes periodisches Inkrementalsignal;
- Figur 5: eine aus den Abtastsignalen gewonnene Codeinformation;
- Figur 6: eine zweite Positionsmesseinrichtung;
- Figur 7: eine dritte Positionsmesseinrichtung, und
- Figur 8: eine vierte Positionsmesseinrichtung.

Die erfindungsgemäße absolute Positionsmesseinrichtung kann zur Messung von linearen oder rotatorischen Bewegungen eingesetzt werden, wobei ein Codeträger dabei an einem der zu messenden Objekte und eine Abtasteinrichtung am anderen der zu messenden Objekte angebracht ist. Die zu messenden Objekte können dabei der Tisch und der Schlitten einer Werkzeugmaschine, einer Koordinatenmessmaschine oder der Rotor und der Stator eines Elektromotors sein.

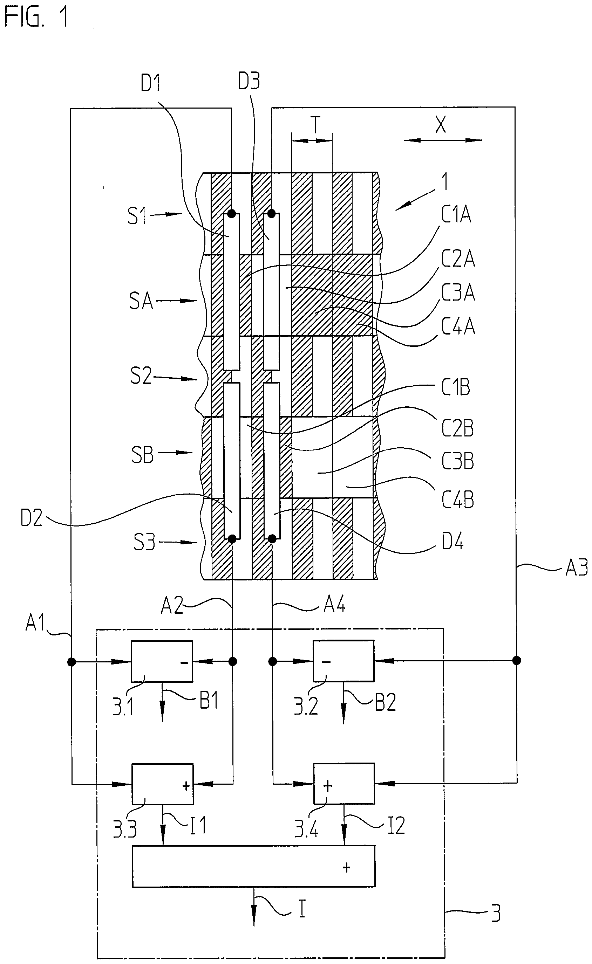

Anhand der Figuren 1 bis 5 wird ein erstes Ausführungsbeispiel einer Positionsmesseinrichtung näher erläutert. Sie umfasst einen Codeträger 1, der von einer Abtasteinrichtung mit mehreren Detektoren D1, D2, D3, D4 abtastbar ist. Der Codeträger 1 ist relativ zur Abtasteinrichtung in Messrichtung X verschiebbar.

Die Positionsmesseinrichtung ist dazu ausgelegt, dass eine zuverlässige absolute Positionsmessung gewährleistet ist.

Eine zuverlässige Positionsmessung wird durch die Verwendung einer speziellen Codierung erreicht. Diese Codierung des Codeträgers 1 ist ein Pseudo-Random-Code, der aus einer Folge von Codeelementen C1, C2, C3, C4 besteht, die in Messrichtung X aufeinanderfolgend angeordnet sind. Jedes Codeelement C1, C2, C3, C4 besteht wiederum aus zwei Teilbereichen C1A, C1B; C2A, C2B; C3A, C3B; C4A, C4B, die zueinander komplementär ausgebildet sind. Komplementär bedeutet dabei, dass sie inverse Eigenschaften besitzen, also beim optischen Abtastprinzip bei Durchlicht-Abtastung transparent und nicht transparent bzw. bei Auflicht-Abtastung reflektierend bzw. nicht reflektierend sind. Die ersten Teilbereiche C1A, C2A, C3A, C4A der Codeelemente C1, C2, C3, C4 sind in diesem Ausführungsbeispiel in einer ersten Codespur SA und die zweiten Teilbereiche C1B, C2B, C3B, C4B der Codeelemente C1, C2, C3, C4 in einer zweiten Codespur SB angeordnet, die parallel zur ersten Codespur SA verläuft.

Im dargestellten Beispiel gemäß Figur 1 wird davon ausgegangen, dass die Abfolge der Teilbereiche C1A, C2A, C3A, C4A der ersten Codespur SA zu den Teilbereichen C1B, C2B, C3B, C4B der zweiten Codespur SB jeweils eines Codeelementes C1 bis C4 dunkel -> hell die Codeinformation B in Form eines Bits=0 und die Abfolge hell -> dunkel die Codeinformation B in Form eines Bits=1 definiert. Somit definiert die Folge von Codeelementen C1 bis C4 des in Figur 1 dargestellten Codes die Codeinformation 0100.

Der Codeträger 1 weist neben den Codespuren SA, SB eine periodische Inkrementalteilung auf. Diese Inkrementalteilung ist in Inkremental-Teilspuren S1, S2, S3 aufgeteilt und beidseitig zur ersten Codespur SA sowie beidseitig zur zweiten Codespur SB angeordnet. Die Inkremental-Teilspuren S1, S2, S3 verlaufen parallel zu den beiden Codespuren SA, SB in Messrichtung X.

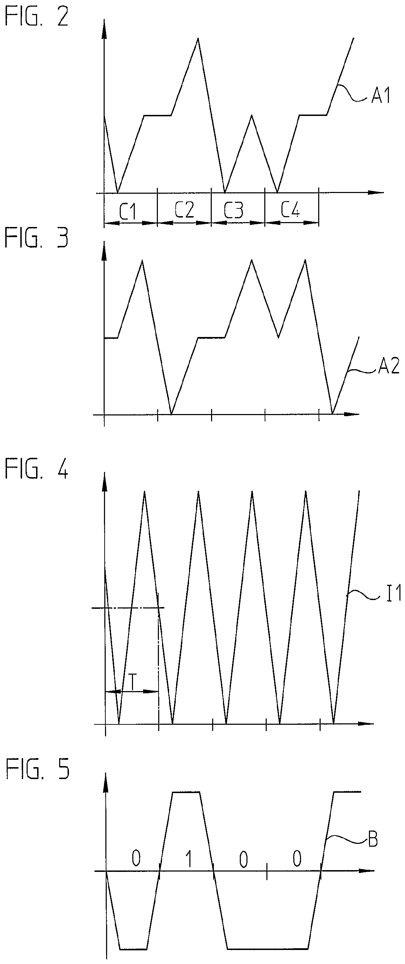

Die Detektoren D1, D2, D3, D4 umfassen zumindest einen ersten Detektor D1 zur gemeinsamen Abtastung jeweils des ersten Teilbereichs C1A, C2A, C3A, C4A eines Codeelementes C1, C2, C3, C4 sowie der Inkrementalteilung. Hierzu ist der erste Detektor D1 der ersten Codespur SA sowie den beidseits dazu verlaufenden Inkremental-Teilspuren S1, S2 zugeordnet und tastet diese bei der Positionsmessung ab. Dieser erste Detektor D1 liefert dadurch ein erstes Abtastsignal A1, dessen positionsabhängiger Verlauf entlang der Codeelemente C1, C2, C3, C4 in Figur 2 schematisch dargestellt ist.

Die mehreren Detektoren D1, D2, D3, D4 umfassen weiterhin zumindest einen zweiten Detektor D2 zur gemeinsamen Abtastung des zweiten Teilbereichs C1B, C2B, C3B, C4B jeweils eines der Codeelemente C1, C2, C3, C4 sowie der Inkrementalteilung. Hierzu ist der zweite Detektor D2 der zweiten Codespur SB sowie den beidseits dazu verlaufenden Inkremental-Teilspuren S2, S3 zugeordnet und tastet diese bei der Positionsmessung ab. Dieser zweite Detektor D2 liefert dadurch ein zweites Abtastsignal A2, dessen positionsabhängiger Verlauf in Abhängigkeit der Position entlang der Codeelemente C1, C2, C3, C4 in Figur 3 schematisch dargestellt ist.

Die Detektoren D1, D2 erfassen bei der Positionsmessung jeweils die momentane Lichtverteilung und erzeugen in Abhängigkeit der Lichtintensität ein positionsabhängiges analoges Abtastsignal A1, A2 proportional zur erfassten Lichtintensität. Der tatsächliche Verlauf der Abtastsignale A1, A2 kann von dem in den Figuren 2 und 3 dargestellten Verlauf abweichen, insbesondere wird sich ein fließender Verlauf ohne Ecken ergeben. Daraus resultierend wird sich für das in Figur 4 dargestellte periodische Inkrementalsignal I1 in der Praxis ein sinus-förmiger Verlauf ergeben.

Das erste Abtastsignal A1 und das zweite Abtastsignal A2 werden einer Auswerteeinheit 3 zugeführt. Die Auswerteeinheit 3 ist dazu ausgelegt das erste Abtastsignal A1 mit dem zweiten Abtastsignal A2 zu vergleichen. Das Vergleichsergebnis definiert in der dargestellten Abtastposition die Codeeinformation B1 des Codeelementes C1. Der Vergleich kann eine Quotientenbildung oder das Bilden einer Differenz umfassen. Besonders einfach ist die Differenzbildung realisierbar. Durch Bilden der Differenz zwischen dem ersten Abtastsignal A1 und dem zweiten Abtastsignal A2 heben sich die Anteile, welche aus der Abtastung der Inkrementalteilung resultiert, vollständig auf. Weiterhin addieren sich die Anteile, welche aus der Abtastung des Codeelementes C1 resultieren. Der Modulationsgrad des Signals, welches die Codeinformation B1 definiert, wird dadurch verdoppelt. Der Verlauf des Signales, welches die Codeinformation B definiert, ist in Abhängigkeit der Position entlang der Codeelemente C1, C2, C3, C4 in Figur 5 schematisch dargestellt. Die Erhöhung des Modulationsgrades resultiert daraus, dass die beiden Teilbereiche C1A und C1B des Codeelementes C1 komplementär zueinander ausgebildet sind, so dass damit auch die Intensitäten der Abtastsignale der ersten Codespur SA und der zweiten Codespur SB allein betrachtet invers zueinander sind.

Zum Vergleich der beiden Abtastsignale A1, A2 ist im dargestellten Beispiel ein erster Komparator 3.1 und zum Vergleich der beiden Abtastsignale A3, A4 ein zweiter Komparator 3.2 vorgesehen. Die beiden Komparatoren können dazu ausgebildet sein, die jeweiligen Abtastsignale A1, A2 sowie A3, A4 als Analogsignale oder alternativ als Digitalsignale miteinander zu vergleichen.

Der Auswerteeinheit 3 wird das erste Abtastsignal A1 und das zweite Abtastsignal A2 desweitern zugeführt, um daraus durch Kombination dieser Abtastsignale A1 und A2 ein periodisches Inkrementalsignal I1 zu bilden. Diese Kombination ist vorzugsweise eine einfache Addition. Bei dieser Addition heben sich die Anteile der Signale aus der Abtastung der Codespuren SA, SB auf und die Anteile der Signale aus der Abtastung der Inkrementalteilung, also der Inkremental-Teilspuren S1, S2, S3 werden addiert. Der positionsabhängige Verlauf des periodischen Inkrementalsignals I1 ist in Figur 4 schematisch dargestellt.

Zur Gewinnung eines mehrstelligen Codewortes an einer Momentanposition umfasst die Abtasteinrichtung weitere Detektoren, die gegenüber den ersten und den zweiten Detektoren D1, D2 jeweils um ein ganzzahlig Vielfaches der Länge eines Teilbereiches C1A, C1B, C2A, C2B, C3A, C3B, C4A, C4B eines Codeelementes C1, C2, C3, C4 angeordnet sind. Im Beispiel ist in Figur 1 ein weiterer erster Detektor D3 und ein weiterer zweiter Detektor D4 dargestellt. Die Verarbeitung der dadurch gewonnenen Abtastsignale A3, A4 erfolgt entsprechend der Abtastsignale A1, A2, indem durch Differenzbildung die zweite Codeinformation B2 für das zweite Codeelement C2 gewonnen wird und durch Addition ein weiteres periodisches Inkrementalsignal I2 gewonnen wird. Die beiden Inkrementalsignale I1, I2 sind phasengleich, so dass diese zu einem gemeinsamen periodischen Inkrementalsignal I aufaddiert werden können, wodurch der Modulationsgrad des an der Auswerteeinheit 3 zur Verfügung gestellten periodischen Inkrementalsignals I erhöht wird.

Zur Kombination der beiden Abtastsignale A1, A2 ist im dargestellten Beispiel ein erster Baustein 3.3 und zur Kombination der beiden Abtastsignale A3, A4 ein zweiter Baustein 3.4 vorgesehen. Die beiden Bausteine können dazu ausgebildet sein, die jeweiligen Abtastsignale A1, A2 sowie A3, A4 als Analogsignale oder alternativ als Digitalsignale miteinander zu kombinieren, insbesondere zu addieren.

Besonders vorteilhaft ist es, wenn die Periodenlänge T der periodischen Inkrementalteilung der Länge (in Messrichtung X) eines Teilbereiches C1A, C1B, C2A, C2B, C3A, C3B, C4A, C4B entspricht. Dadurch steht innerhalb einer absoluten Codeinformation B das Inkrementalsignal I1 mit einer Signalperiode entsprechend der Länge T zur Verfügung.

In nicht gezeigter Weise ist es möglich, zusätzliche Detektoren innerhalb der Länge T vorzusehen. Mit diesen Detektoren können dann zu den oben beschriebenen Abtastsignalen A1, A2 phasenverschobene Abtastsignale erzeugt werden, und daraus wiederum zu der vorhandenen Codeinformationen B1 phasenverschobene Codeinformationen sowie zu dem Inkrementalsignal I1 phasenverschobene Inkrementalsignale. Zur Erzeugung von vier jeweils um 90° gegeneinander phasenverschobener periodischer Inkrementalsignale sind vier Detektoren D1 und vier Detektoren D2 innerhalb einer Periode T anzuordnen.

Das periodische Inkrementalsignal I oder I1 bzw. I2 kann dazu verwendet werden, die durch die Codeinformation B in Schritten entsprechend der Länge T absolut ortsaufgelöste Wegstrecke noch feiner absolut zu unterteilen. Hierzu wird das Inkrementalsignal I oder I1 bzw. I2 in bekannter Weise interpoliert.

Wird eine noch weiter unterteilte Positionsmessung gefordert, kann parallel zu den bereits vorhandenen Spuren zusätzlich eine weitere Inkrementalspur angeordnet werden, dessen Teilungsperiode dann kleiner ist als die Periodenlänge T.

Die periodischen Inkrementalsignale I1, I1, I können auch dazu verwendet werden, die Abtastung der Codeelemente C1, C2, C3, C4 zu optimieren. Dies kann in bekannter Weise dadurch erfolgen, dass innerhalb der Länge eines Codeelementes C1, C2, C3, C4 mehrere Detektoren angeordnet werden und die Positionsinformation aus dem Inkrementalsignal (Interpolationswert innerhalb einer Teilungsperiode T) dazu verwendet wird einen dieser mehreren Detektoren zur Bildung der Codeinformation B auszuwählen. Ausgewählt wird dann der Detektor, der das Codeelement möglichst mittig abtastet, um eine eindeutige Codeinformation zu erhalten. Hierzu wird ausdrücklich auf die EP 1 821 073 A2 verwiesen.

Die geometrische Anordnung der für die Erfindung erforderlichen Codeelemente C1, C2, C3, C4 und Inkrementalteilungen ist in vorteilhafter Weise derart gewählt, dass einerseits eine platzsparende Anordnung und andererseits aber auch eine große Toleranz bei der Abtastung erreichbar sind.

Die platzsparende Anordnung ist durch die gemeinsame Abtastung der ersten Codespur SA und der Inkrementalteilung - hier in Form der Inkremental-Teilspuren S1, S2 - mittels des ersten Detektors D1 sowie durch die gemeinsame Abtastung der zweiten Codespur SB und der Inkrementalteilung - hier in Form der Inkremental-Teilspuren S2, S3 - mittels des zweiten Detektors D2 gewährleistet. Damit wird ermöglicht, die Codespuren SA, SB und die Inkremental-Teilspuren S1, S2, S3 direkt nebeneinander (senkrecht zur Messrichtung X betrachtet) anzuordnen.

Eine große Toleranz wird vorzugsweise dadurch erreicht, indem der erste Detektor D1 zur Bildung des ersten Abtastsignals A1 der ersten Codespur SA sowie den beidseits dazu verlaufenden Inkremental-Teilspuren S1, S2 zugeordnet ist, und dass der zweite Detektor D2 zur Bildung des zweiten Abtastsignals A2 der zweiten Codespur SB sowie den beidseits dazu verlaufenden Inkremental-Teilspuren S2, S3 zugeordnet ist. Durch diese jeweils symmetrisch zu den Codespuren SA, SB angeordneten Inkremental-Teilspuren S1, S2, S3 ist es nun möglich, dass der erste Detektor D1 senkrecht zur Messrichtung X eine Ausdehnung aufweist, dass er die beidseits zur ersten Codespur SA verlaufenden Inkremental-Teilspuren S1, S2 jeweils nur teilweise überlappt, und dass der zweite Detektor D2 senkrecht zur Messrichtung X eine Ausdehnung aufweist, dass er die beidseits zur zweiten Codespur SB verlaufenden Inkremental-Teilspuren S2, S3 jeweils nur teilweise überlappt. Der nicht überlappende Bereich dient als Toleranzbereich für die Lage der Abtasteinrichtung gegenüber dem Codeträger 1 senkrecht zur Messrichtung X. Innerhalb dieses Toleranzbereiches kann die Abtasteinrichtung ihre Lage relativ zum Codeträger 1 senkrecht zur Messrichtung X verändern, ohne dass dabei das erste Abtastsignal A1 sowie auch das zweite Abtastsignal A2 moduliert werden.

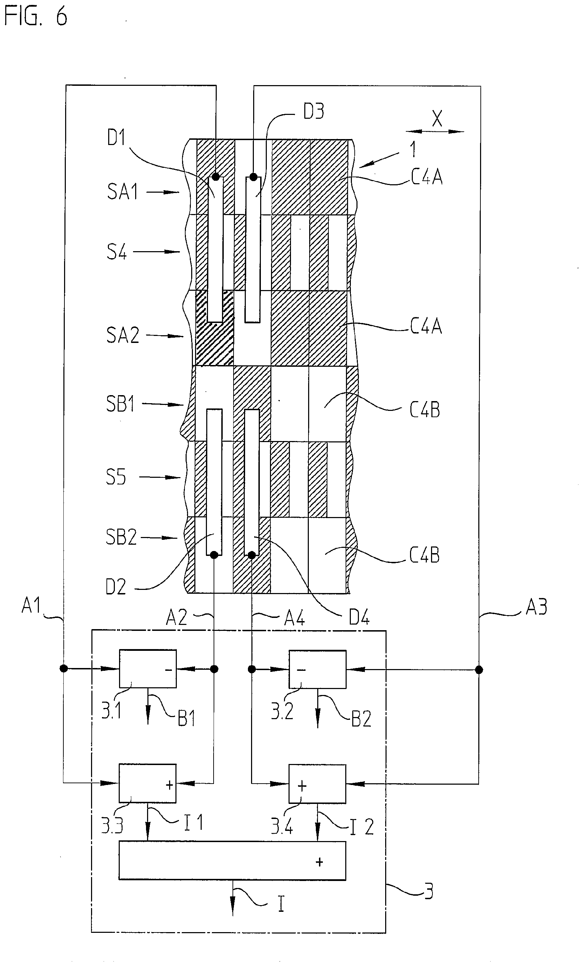

Anhand der Figur 6 wird ein zweites Ausführungsbeispiel erläutert. Die zueinander komplementären Teilbereiche C1A, C1B; C2A, C2B; C3A, C3B; C4A, C4B der Codeelemente C1, C2, C3, C4 sind wiederum in separaten Codespuren angeordnet. Im Unterschied zu dem vorhergehenden Ausführungsbeispiel ist die zum Erreichen der großen Toleranzen (senkrecht zur Messrichtung X) geforderte Symmetriebedingung hier dadurch erreicht, dass die erste Codespur in parallel zueinander verlaufende erste Code-Teilspuren SA1, SA2 sowie die zweite Codespur in zweite parallel zueinander verlaufende Code-Teilspuren SB1, SB2 angeordnet sind, wobei beidseits parallel zu einer der Inkremental-Teilspuren S4 jeweils die ersten Code-Teilspuren SA1, SA2 verlaufen und beidseits parallel zu einer der Inkremental-Teilspuren S5 die zweiten Code-Teilspuren SB1, SB2 verlaufen. Aus Gründen der Übersichtlichkeit sind in der Figur 6 nur die Teilbereiche C4A und C4B der Code- Teilspuren SA1, SA2, SB1, SB2 mit Bezugszeichen versehen.

Zur Abtastung weist der erste Detektor D1 quer zur Messrichtung X eine Ausdehnung auf, dass er die beidseits der ersten Inkremental-Teilspur S4 angeordneten ersten Code-Teilspuren SA1, SA2 jeweils nur teilweise überlappt, und weist der zweite Detektor D2 quer zur Messrichtung X eine Ausdehnung auf, dass er die beidseits der zweiten Inkremental-Teilspur S5 angeordneten zweiten Code-Teilspuren SB1, SB2 jeweils nur teilweise überlappt.

Bei diesem zweiten Ausführungsbeispiel werden die gleichen Abtastsignale A1 bis A4 erzeugt wie beim ersten Ausführungsbeispiel, so dass die Auswertung in oben beschriebener Weise anhand der Auswerteeinheit 3 erfolgt und die Codeinformationen B1 und B2 für die beiden Codeelemente C1 und C2 sowie das periodische Inkrementalsignal I gebildet werden.

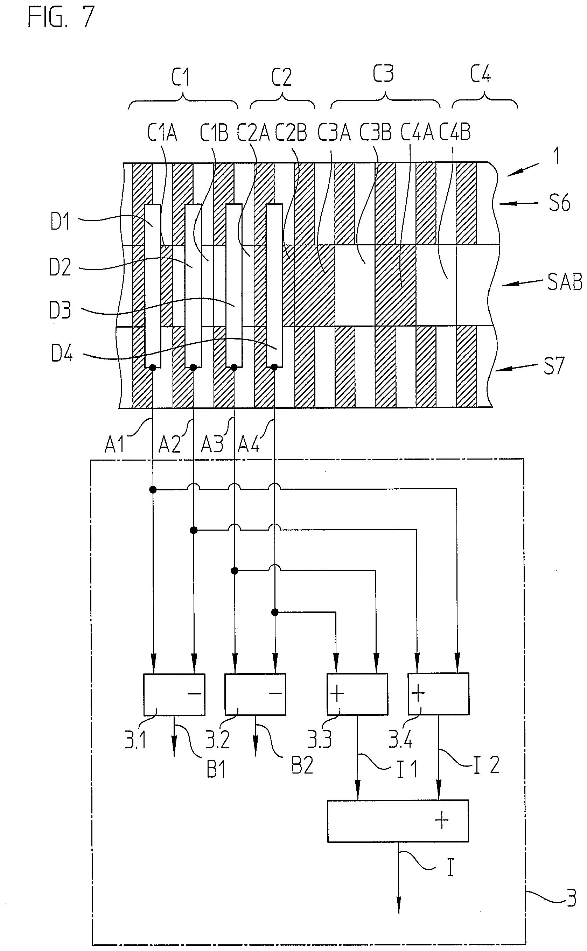

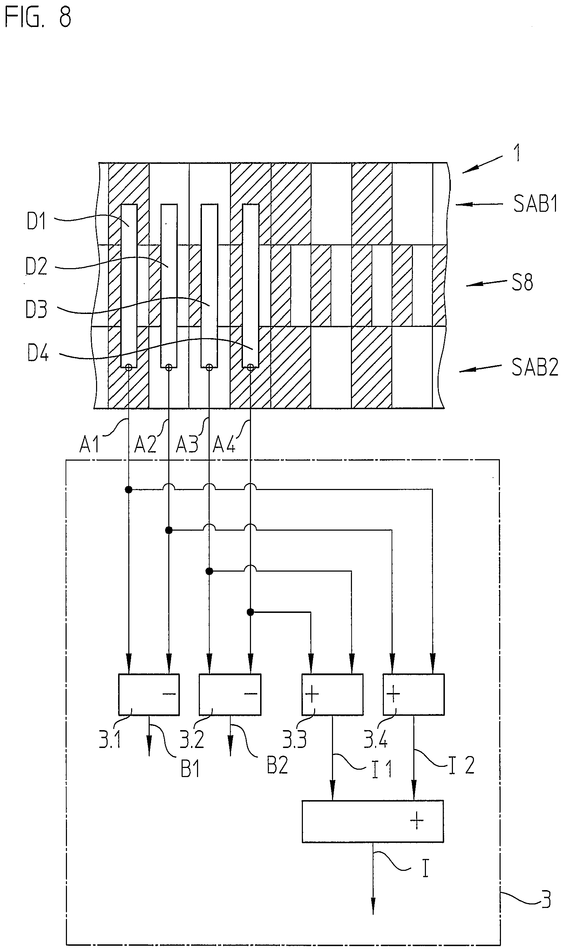

Anhand der Figuren 7 und 8 werden ein drittes und ein viertes Ausführungsbeispiel der Erfindung erläutert. Dabei sind die ersten Teilbereiche C1A, C2A, C3A, C4A und die zweiten Teilbereiche C1B, C2B, C3B, C4B jedes der Codeelemente C1, C2, C3, C4 jeweils in Messrichtung X aufeinanderfolgend in einer gemeinsamen Codespur SAB angeordnet. Der erste Detektor D1 und der zweite Detektor D2 sind zur Erzeugung der Codeinformation B1 sowie des periodischen Inkrementalsignals I1 nun in einem Abstand entsprechend der Länge eines der Teilbereiche C1A, C1B, C2A, C2B, C3A, C3B, C4A, C4B angeordnet. Aus dem ersten Teilbereich C1A sowie der zugeordneten Inkrementalteilung wird mittels des ersten Detektors D1 durch gemeinsame Abtastung wiederum das erste Abtastsignal A1 erzeugt. Aus dem zweiten Teilbereich C1B sowie der zugeordneten Inkrementalteilung wird mittels des zweiten Detektors D2 durch gemeinsame Abtastung wiederum das zweite Abtastsignal A2 erzeugt.

Zum Erreichen einer großen Toleranz ist gemäß der Figur 7 die Inkrementalteilung in Inkremental-Teilspuren S6, S7 beidseits parallel zur gemeinsamen Codespur SAB angeordnet. Der erste Detektor D1 und der zweite Detektor D2 weisen vorzugsweise senkrecht zur Messrichtung X jeweils eine Ausdehnung auf, dass er die beidseits zur gemeinsamen Codespur SAB verlaufenden Inkremental-Teilspuren S6, S7 jeweils nur teilweise überlappt.

Dadurch werden die gleichen Abtastsignale A1 bis A4 erzeugt wie beim ersten Ausführungsbeispiel, so dass die Auswertung in oben beschriebener Weise anhand der Auswerteeinheit 3 erfolgt und die Codeinformationen B1 und B2 für die beiden Codeelemente C1 und C2 sowie das periodische Inkrementalsignal I gebildet werden.

Zum Erreichen einer großen Toleranz ist gemäß der Figur 8 die gemeinsame Codespur in Code-Teilspuren SAB1, SAB2 angeordnet, die beidseits parallel zu einer Inkrementalspur S8 verlaufen.

Der erste Detektor D1 und der zweite Detektor D2 weisen senkrecht zur Messrichtung X eine Ausdehnung auf, dass diese die erste Code-Teilspur SAB1 sowie die zweite Code-Teilspur SAB2 jeweils nur teilweise überlappen.

Dadurch werden die gleichen Abtastsignale A1 bis A4 erzeugt wie beim ersten Ausführungsbeispiel, so dass die Auswertung in oben beschriebener Weise anhand der Auswerteeinheit 3 erfolgt und die Codeinformationen B1 und B2 für die beiden Codeelemente C1 und C2 sowie das periodische Inkrementalsignal I gebildet werden.

Die in den Ausführungsbeispielen angegebenen Aufteilungen der Spuren in Teilspuren zum Erreichen einer großen Toleranz sind besonders vorteilhaft, aber für die Erfindung nicht zwingend. Wird nämlich die Abtasteinrichtung relativ zum Codeträger bei der Positionsmessung in Messrichtung X gut geführt, sind Querbewegungen der Abtasteinheit vernachlässigbar.

Die periodische Inkrementalteilung weist bei den beschriebenen Ausführungsbeispielen 90° zur Messrichtung X verlaufende Kanten auf. Diese Kanten können zur Oberwellenfilterung in bekannter Weise auch anders geformt sein. Als Beispiel wird auf die DE 10 2004 041 950 A1 verwiesen. Dabei verlaufen die Kanten der Inkrementalteilung gegenüber der Messrichtung X um einen Winkel abweichend von 90°.

## Patentansprüche

1. Positionsmesseinrichtung mit
- einem Codeträger (1) mit
• einer Folge von Codeelementen (C1, C2, C3, C4), wobei jedes Codeelement (C1, C2, C3, C4) aus einem ersten Teilbereich (C1A, C2A, C3A, C4A) und einem zweiten Teilbereich (C1B, C2B, C3B, C4B) besteht, die zueinander komplementäre Eigenschaften aufweisen, und
• einer periodischen Inkrementalteilung;
- einer Abtasteinrichtung mit mehreren Detektoren (D1, D2, D3, D4),
• wobei ein erster Detektor (D1) zur gemeinsamen Abtastung des ersten Teilbereichs (C1A) eines der Codeelemente (C1) sowie der Inkrementalteilung ausgebildet ist und dadurch ein erstes Abtastsignal (A1) erzeugbar ist und
• wobei ein zweiter Detektor (D2) zur gemeinsamen Abtastung des zweiten Teilbereichs (C1B) des einen Codeelementes (C1) sowie der Inkrementalteilung ausgebildet ist und dadurch ein zweites Abtastsignal (A2) erzeugbar ist;
- einer Auswerteeinheit (3), welcher das erste Abtastsignal (A1) und das zweite Abtastsignal (A2) zugeführt sind und die dazu ausgebildet ist, daraus eine Codeinformation (B1) für das Codeelement (C1) zu bilden und die dazu ausgebildet ist das erste Abtastsignal (A1) und das zweite Abtastsignal (A2) miteinander zu kombinieren, um ein periodisches Inkrementalsignal (I1) zu bilden.

2. Positionsmesseinrichtung nach Anspruch 1, **dadurch gekennzeichnet, dass** die ersten Teilbereiche (C1A, C2A, C3A, C4A) der Codeelemente (C1, C2, C3, C4) in einer ersten Codespur (SA) und die zweiten Teilbereiche (C1B, C2B, C3B, C4B) der Codeelemente (C1, C2, C3, C4) in einer zweiten Codespur (SB) angeordnet sind, die parallel zur ersten Codespur (SA) verläuft.

3. Positionsmesseinrichtung nach Anspruch 2, **dadurch gekennzeichnet, dass** die Inkrementalteilung in Inkremental-Teilspuren (S1, S2) beidseits parallel zur ersten Codespur (SA) und in Inkremental-Teilspuren (S2, S3) beidseits parallel zur zweiten Codespur (SB) angeordnet ist.

4. Positionsmesseinrichtung nach Anspruch 3, **dadurch gekennzeichnet, dass** der erste Detektor (D1) zur Bildung des ersten Abtastsignals (A1) der ersten Codespur (SA) sowie den beidseits dazu verlaufenden Inkremental-Teilspuren (S1, S2) zugeordnet ist, und dass der zweite Detektor (D2) zur Bildung des zweiten Abtastsignals (A2) der zweiten Codespur (SB) sowie den beidseits dazu verlaufenden Inkremental-Teilspuren (S2, S3) zugeordnet ist.

5. Positionsmesseinrichtung nach Anspruch 4, **dadurch gekennzeichnet, dass** der erste Detektor (D1) senkrecht zur Messrichtung X eine Ausdehnung aufweist, dass er die beidseits zur ersten Codespur (SA) verlaufenden Inkremental-Teilspuren (S1, S2) jeweils nur teilweise überlappt, und dass der zweite Detektor (D2) senkrecht zur Messrichtung X eine Ausdehnung aufweist, dass er die beidseits zur zweiten Codespur (SB) verlaufenden Inkremental-Teilspuren (S2, S3) jeweils nur teilweise überlappt.

6. Positionsmesseinrichtung nach Anspruch 2, **dadurch gekennzeichnet, dass** die Inkrementalteilung in Inkremental-Teilspuren (S4, S5), die erste Codespur in erste Code-Teilspuren (SA1, SA2) sowie die zweite Codespur in zweite Code-Teilspuren (SB1, SB2) angeordnet sind, wobei beidseits parallel zu einer der Inkremental-Teilspuren (S4) jeweils die ersten Code-Teilspuren (SA1, SA2) verlaufen und beidseits parallel zu einer der Inkremental-Teilspuren (S5) die zweiten Code-Teilspuren (SB1, SB2) verlaufen.

7. Positionsmesseinrichtung nach Anspruch 6, **dadurch gekennzeichnet, dass** der erste Detektor (D1) quer zur Messrichtung X eine Ausdehnung aufweist, dass er die beidseits der ersten Inkremental-Teilspur (S4) angeordneten ersten Code-Teilspuren (SA1, SA2) jeweils nur teilweise überlappt, und dass der zweite Detektor (D2) quer zur Messrichtung X eine Ausdehnung aufweist, dass er die beidseits der zweiten Inkremental-Teilspur (S5) angeordneten zweiten Code-Teilspuren (SB1, SB2) jeweils nur teilweise überlappt.

8. Positionsmesseinrichtung nach einem der vorhergehenden Ansprüche 2 bis 7, **dadurch gekennzeichnet, dass** mehrere erste Detektoren (D1, D3) und mehrere zweite Detektoren (D2, D4) in Messrichtung X in Abständen entsprechend der Länge eines der Teilbereiche (C1A, C1B, C2A, C2B, C3A, C3B, C4A, C4B) angeordnet sind.

9. Positionsmesseinrichtung nach Anspruch 1, **dadurch gekennzeichnet, dass** die ersten und zweiten Teilbereiche (C1A, C1B; C2A, C2B; C3A, C3B; C4A, C4B) jedes der Codeelemente (C1, C2, C3, C4) in Messrichtung X aufeinanderfolgend in einer gemeinsamen Codespur (SAB) angeordnet sind.

10. Positionsmesseinrichtung nach Anspruch 9, **dadurch gekennzeichnet, dass** die Inkrementalteilung in Inkremental-Teilspuren (S6, S7) beidseits parallel zur gemeinsamen Codespur (SAB) angeordnet ist.

11. Positionsmesseinrichtung nach Anspruch 10, **dadurch gekennzeichnet, dass** der erste Detektor (D1) und der zweite Detektor (D2) senkrecht zur Messrichtung X jeweils eine Ausdehnung aufweist, dass er die beidseits zur gemeinsamen Codespur (SAB) verlaufenden Inkremental-Teilspuren (S6, S7) jeweils nur teilweise überlappt.

12. Positionsmesseinrichtung nach Anspruch 9, **dadurch gekennzeichnet, dass** die gemeinsame Codespur Code-Teilspuren (SAB1, SAB2) umfasst, die beidseits parallel zu einer die Inkrementalteilung aufweisenden Inkrementalspur (S8) verlaufen.

13. Positionsmesseinrichtung nach Anspruch 12, **dadurch gekennzeichnet, dass** der erste Detektor (D1) und der zweite Detektor (D2) senkrecht zur Messrichtung X eine Ausdehnung aufweist, dass er die Code-Teilspuren (SAB1, SAB2) jeweils nur teilweise überlappt.

14. Positionsmesseinrichtung nach einem der Ansprüche 9 bis 13, **dadurch gekennzeichnet, dass** mehrere erste Detektoren (D1, D3) in Messrichtung X in Abständen entsprechend der Länge eines Codeelementes (C1, C2, C3, C4) angeordnet sind, und dass mehrere zweite Detektoren (D2, D4) in Messrichtung X in Abständen entsprechend der Länge eines Codeelementes (C1, C2, C3, C4) angeordnet sind.

15. Positionsmesseinrichtung nach einem der vorhergehenden Ansprüche, **dadurch gekennzeichnet, dass** die Kombination eine Addition des ersten Abtastsignals (A1) mit dem zweiten Abtastsignal (A2) ist.

16. Positionsmesseinrichtung nach einem der vorhergehenden Ansprüche, **dadurch gekennzeichnet, dass** die Auswerteeinheit (3) dazu ausgebildet ist das erste Abtastsignal (A1) mit dem zweiten Abtastsignal (A2) zu vergleichen, um die Codeinformation (B1) des Codeelementes (C1) zu bilden.

17. Positionsmesseinrichtung nach Anspruch 16, **dadurch gekennzeichnet, dass** der Vergleich das Bilden der Differenz des ersten Abtastsignals (A1) und des zweiten Abtastsignals (A2) ist.

18. Positionsmesseinrichtung nach einem der vorhergehenden Ansprüche, **dadurch gekennzeichnet, dass** die ersten Teilbereiche (C1A, C2A, C3A, C4A) und die zweiten Teilbereiche (C1B, C2B, C3B, C4B) der Codeelemente (C1, C2, C3, C4) jeweils zueinander komplementäre optische Eigenschaften aufweisen.

19. Positionsmesseinrichtung nach einem der vorhergehenden Ansprüche, **dadurch gekennzeichnet, dass** die Periodenlänge (T) der periodischen Inkrementalteilung der Länge eines Teilbereiches ((C1A, C1B; C2A, C2B; C3A, C3B; C4A, C4B) der Codeelemente (C1, C2, C3, C4) entspricht.

20. Positionsmesseinrichtung nach Anspruch 19, **dadurch gekennzeichnet, dass** innerhalb der Periodenlänge (T) mehrere Detektoren angeordnet sind, um zu dem ersten Abtastsignal (A1) und zu dem zweiten Abtastsignal (A2) jeweils ein phasenverschobenes Abtastsignal zu erzeugen, die der Auswerteeinheit (3) zugeführt sind, um daraus zumindest ein zu dem periodischen Inkrementalsignal (I1) phasenverschobenes periodisches Inkrementalsignal zu bilden.

## Claims

1. Position measuring device comprising
- a code carrier (1) comprising
• a sequence of code elements (C1, C2, C3, C4), wherein each code element (C1, C2, C3, C4) consists of a first partial region (C1A, C2A, C3A, C4A) and a second partial region (C1B, C2B, C3B, C4B), which have mutually complementary properties, and
• a periodic incremental graduation;
- a scanning device comprising a plurality of detectors (D1, D2, D3, D4),
• wherein a first detector (D1) is configured for jointly scanning the first partial region (C1A) of one of the code elements (C1) and also the incremental graduation and a first scanning signal (A1) is generatable as a result, and
• wherein a second detector (D2) is configured for jointly scanning the second partial region (C1B) of said one code element (C1) and also the incremental graduation and a second scanning signal (A2) is generatable as a result;
- an evaluation unit (3), to which the first scanning signal (A1) and the second scanning signal (A2) are fed and which is configured to form therefrom code information (B1) for the code element (C1) and which is configured to combine the first scanning signal (A1) and the second scanning signal (A2) with one another in order to form a periodic incremental signal (I1).

2. Position measuring device according to Claim 1, **characterized in that** the first partial regions (C1A, C2A, C3A, C4A) of the code elements (C1, C2, C3, C4) are arranged in a first code track (SA) and the second partial regions (C1B, C2B, C3B, C4B) of the code elements (C1, C2, C3, C4) are arranged in a second code track (SB), which extends parallel to the first code track (SA).

3. Position measuring device according to Claim 2, **characterized in that** the incremental graduation is arranged in incremental partial tracks (S1, S2) on both sides parallel to the first code track (SA) and in incremental partial tracks (S2, S3) on both sides parallel to the second code track (SB).

4. Position measuring device according to Claim 3, **characterized in that** the first detector (D1) for forming the first scanning signal (A1) is assigned to the first code track (SA) and also to the incremental partial tracks (S1, S2) extending on both sides with respect thereto, and **in that** the second detector (D2) for forming the second scanning signal (A2) is assigned to the second code track (SB) and also to the incremental partial tracks (S2, S3) extending on both sides with respect thereto.

5. Position measuring device according to Claim 4, **characterized in that** the first detector (D1) has perpendicularly to the measurement direction X an extent such that it in each case only partly overlaps the incremental partial tracks (S1, S2) extending on both sides with respect to the first code track (SA), and **in that** the second detector (D2) has perpendicularly to the measurement direction X an extent such that it in each case only partly overlaps the incremental partial tracks (S2, S3) extending on both sides with respect to the second code track (SB).

6. Position measuring device according to Claim 2, **characterized in that** the incremental graduation is arranged in incremental partial tracks (S4, S5), the first code track is arranged in first code partial tracks (SA1, SA2) and the second code track is arranged in second code partial tracks (SB1, SB2), wherein the first code partial tracks (SA1, SA2) in each case extend on both sides parallel to one of the incremental partial tracks (S4) and the second code partial tracks (SB1, SB2) extend on both sides parallel to one of the incremental partial tracks (S5).

7. Position measuring device according to Claim 6, **characterized in that** the first detector (D1) has transversely with respect to the measurement direction X an extent such that it in each case only partly overlaps the first code partial tracks (SA1, SA2) arranged on both sides of the first incremental partial track (S4), and **in that** the second detector (D2) has transversely with respect to the measurement direction X an extent such that it in each case only partly overlaps the second code partial tracks (SB1, SB2) arranged on both sides of the second incremental partial track (S5).

8. Position measuring device according to any of the preceding Claims 2 to 7, **characterized in that** a plurality of first detectors (D1, D3) and a plurality of second detectors (D2, D4) are arranged in the measurement direction X at distances corresponding to the length of one of the partial regions (C1A, C1B, C2A, C2B, C3A, C3B, C4A, C4B).

9. Position measuring device according to Claim 1, **characterized in that** the first and second partial regions (C1A, C1B; C2A, C2B; C3A, C3B; C4A, C4B) of each of the code elements (C1, C2, C3, C4) are arranged in the measurement direction X successively in a common code track (SAB).

10. Position measuring device according to Claim 9, **characterized in that** the incremental graduation is arranged in incremental partial tracks (S6, S7) on both sides parallel to the common code track (SAB).

11. Position measuring device according to Claim 10, **characterized in that** the first detector (D1) and the second detector (D2) perpendicularly to the measurement direction X have in each case an extent such that they in each case only partly overlap the incremental partial tracks (S6, S7) extending on both sides with respect to the common code track (SAB).

12. Position measuring device according to Claim 9, **characterized in that** the common code track comprises code partial tracks (SAB1, SAB2) extending on both sides parallel to an incremental track (S8) having the incremental graduation.

13. Position measuring device according to Claim 12, **characterized in that** the first detector (D1) and the second detector (D2) have perpendicularly to the measurement direction X an extent such that they in each case only partly overlap the code partial tracks (SAB1, SAB2).

14. Position measuring device according to any of Claims 9 to 13, **characterized in that** a plurality of first detectors (D1, D3) are arranged in the measurement direction X at distances corresponding to the length of a code element (C1, C2, C3, C4), and **in that** a plurality of second detectors (D2, D4) at distances corresponding to the length of a code element (C1, C2, C3, C4).

15. Position measuring device according to any of the preceding claims, **characterized in that** the combination is an addition of the first scanning signal (A1) with the second scanning signal (A2).

16. Position measuring device according to any of the preceding claims, **characterized in that** the evaluation unit (3) is configured to compare the signal scanning signal (A1) with the second scanning (B1) of the code element (C1).

17. Position measuring device according to Claim 16, **characterized in that** the comparison is the formation of the difference of the first scanning signal (A1) and the second scanning signal (A2).

18. Position measuring device according to any of the preceding claims, **characterized in that** the first partial regions (C1A, C2A, C3A, C4A) and the second partial regions (C1B, C2B, C3B, C4B) of the code elements (C1, C2, C3, C4) have in each case mutually complementary optical properties.

19. Position measuring device according to any of the preceding claims, **characterized in that** the period length (T) of the periodic incremental graduation corresponds to the length of a partial region (C1A, C1B; C2A, C2B; C3A, C3B; C4A, C4B) of the code elements (C1, C2, C3, C4).

20. Position measuring device according to Claim 19, **characterized in that** a plurality of detectors are arranged within the period length (T) in order to generate with respect to the first scanning signal (A1) and with respect to the second scanning signal (A2) in each case a phase-shifted scanning signal, which are fed to the evaluation unit (3) in order to form therefrom at least one periodic incremental signal which is phase-shifted with respect to the periodic incremental signal (I1).

## Revendications

1. Dispositif de mesure de position comportant
- un support de code (1) comprenant
• une séquence d'éléments de code (C1, C2, C3, C4), dans lequel chaque élément de code (C1, C2, C3, C4) consiste en une première partie (C1A, C2A, C3A, C4A) et une deuxième partie (C1B, C2B, C3B, C4B) qui présentent des propriétés complémentaires entre elles ; et
- une division incrémentale périodique ;
- un dispositif de balayage comportant plusieurs détecteurs (D1, D2, D3, D4),
• dans lequel un premier détecteur (D1) est conçu pour balayer en commun la première zone partielle (C1A) de l'un des éléments de code (C1) ainsi que la division incrémentale de sorte qu'un premier signal de balayage (A1) peut ainsi être généré et
• dans lequel un deuxième détecteur (D2) est configuré pour balayer en commun la deuxième zone partielle (C1B) du premier élément de code (C1) ainsi que la division incrémentale de sorte qu'un deuxième signal de balayage (A2) peut ainsi être généré ;
- une unité d'évaluation (3) à laquelle sont délivrés le premier signal d'échantillonnage (A1) et le deuxième signal d'échantillonnage (A2) et qui est conçue pour créer à partir de ceux-ci des informations de code (B1) destinées à l'élément de code (C1) et qui est conçue pour combiner l'un à l'autre le premier signal de balayage (A2) et le deuxième signal de balayage (A1) afin de créer un signal incrémental périodique (I1).

2. Dispositif de mesure de position selon la revendication 1, **caractérisé en ce que** les premières zones partielles (C1A, C2A, C3A, C4A) des éléments de code (C1, C2, C3, C4) sont disposées dans une première piste de code (SA) et les deuxièmes zones partielles (C1B, C2B, C3B, C4B) des éléments de code (C1, C2, C3, C4) sont disposées dans une deuxième piste de code (SB) qui s'étend parallèlement à la première piste de code (SA) .

3. Dispositif de mesure de position selon la revendication 2, **caractérisé en ce que** la division incrémentale est disposée dans des pistes partielles incrémentales (S1, S2) des deux côtés parallèlement à la première piste de code (SA) et est disposée dans des pistes partielles incrémentales (S2, S3) des deux côtés parallèlement à la deuxième piste de code (SB).

4. Dispositif de mesure de position selon la revendication 3, **caractérisé en ce que**, pour créer le premier signal de balayage (A1), le premier détecteur (D1) est associé à la première piste de code (SA) ainsi qu'aux pistes incrémentales (S1, S2) s'étendant des deux côtés de celle-ci et **en ce que**, pour créer le deuxième signal de balayage (A2), le deuxième détecteur (D2) est associé à la deuxième piste de code (SB) ainsi qu'aux pistes incrémentales (S2, S3) s'étendant des deux côtés de celle-ci.

5. Dispositif de mesure de position selon la revendication 4, **caractérisé en ce que** le premier détecteur (D1) présente une extension perpendiculaire à la direction de mesure X, **en ce qu'**il ne chevauche respectivement que partiellement les pistes incrémentales partielles (S1, S2) s'étendant des deux côtés de la première piste de code (SA) et **en ce que** le deuxième détecteur (D2) présente une extension perpendiculaire à la direction de mesure X, et **en ce qu'**il ne chevauche respectivement que partiellement les pistes de incrémentales partielles (S2, S3) s'étendant des deux côtés de la deuxième piste de code (SB).

6. Dispositif de mesure de position selon la revendication 2, **caractérisé en ce que** la division incrémentale est disposée dans des pistes incrémentales partielles (S4, S5), la première piste de code est disposée dans des premières pistes de code partielles (SA1, SA2) et la deuxième piste de code est disposée dans des deuxièmes pistes de code partielles (SB1, SB2), dans lequel les premières pistes de code partielles (SA1, SA2) s'étendent respectivement des deux côtés parallèlement à l'une des pistes de incrémentales partielles (S4) et les deuxièmes pistes de code partielles (SB1, SB2) s'étendent respectivement des deux côtés parallèlement à l'une des pistes de code partielles (S5).

7. Dispositif de mesure de position selon la revendication 6, **caractérisé en ce que** le premier détecteur (D1) présente une extension transversale à la direction de mesure X, **en ce qu'**il ne chevauche respectivement que partiellement les premières pistes de code partielles (SA1, SA2) disposées des deux côtés de la première piste incrémentale partielle (S4), et **en ce que** le deuxième détecteur (D2) présente une extension transversale à la direction de mesure X, et **en ce qu'**il ne chevauche respectivement que partiellement les deuxièmes pistes de code partielles (SB1, SB2) disposées des deux côtés de la deuxième piste de code (S5).

8. Dispositif de mesure de position selon l'une des revendications précédentes 2 à 7, **caractérisé en ce qu'**une pluralité de premiers détecteurs (D1, D3) et une pluralité de deuxièmes détecteurs (D2, D4) sont disposés dans la direction de mesure X à des intervalles correspondant à la longueur d'une zone partielle (C1A, C1B, C2A, C2B, C3A, C3B, C4A, C4B).

9. Dispositif de mesure de position selon la revendication 1, **caractérisé en ce que** les première et deuxième zones partielles (C1A, C1B ; C2A, C2B ; C3A, C3B ; C4A, C4B) de chacun des éléments de code (C1, C2, C3, C4) sont disposées successivement dans la direction de mesure X dans une piste de code commune (SAB).

10. Dispositif de mesure de position selon la revendication 9, **caractérisé en ce que** la division incrémentale est disposée dans des pistes partielles incrémentales (S6, S7) des deux côtés parallèlement à la piste de code commune (SAB).

11. Dispositif de mesure de position selon la revendication 10, **caractérisé en ce que** le premier détecteur (D1) et le deuxième détecteur (D2) présentent chacun une extension perpendiculaire à la direction de mesure X, de manière à ce qu'ils ne chevauchent respectivement que partiellement les pistes partielles incrémentales (S6, S7) s'étendant des deux côtés de la piste de code commune (SAB).

12. Dispositif de mesure de position selon la revendication 9, **caractérisé en ce que** la piste de code commune comprend des pistes de code partielles (SAB1, SAB2) qui s'étendent des deux côtés parallèlement à une piste incrémentale (S8) comportant la division incrémentale.

13. Dispositif de mesure de position selon la revendication 12, **caractérisé en ce que** le premier détecteur (D1) et le deuxième détecteur (D2) présentent une extension perpendiculaire à la direction de mesure x, et **en ce qu'**ils ne chevauchent respectivement que partiellement les pistes de code partielles (SAB1, SAB2).

14. Dispositif de mesure de position selon l'une des revendications 9 à 13, **caractérisé en ce qu'**une pluralité de premiers détecteurs (D1, D3) sont disposés dans la direction de mesure x à des intervalles correspondant à la longueur d'un élément de code (C1, C2, C3, C4), et **en ce que** plusieurs deuxièmes détecteurs (D2, D4) sont disposés dans la direction de mesure X à des intervalles correspondant à la longueur d'un élément de code (C1, C2, C3, C4).

15. Dispositif de mesure de position selon l'une des revendications précédentes, **caractérisé en ce que** la combinaison est une addition du premier signal de balayage (A1) au deuxième signal de balayage (A2).

16. Dispositif de mesure de position selon l'une des revendications précédentes, **caractérisé en ce que** l'unité d'évaluation (3) est conçue pour comparer le premier signal de balayage (A1) au deuxième signal de balayage (A2) afin de créer les informations de code (B1) de l'élément de code (C1).

17. Dispositif de mesure de position selon la revendication 16, **caractérisé en ce que** la comparaison consiste à calculer la différence entre le premier signal de balayage (A1) et le deuxième signal de balayage (A2).

18. Dispositif de mesure de position selon l'une des revendications précédentes, **caractérisé en ce que** les premières zones partielles (C1A, C2A, C3A, C4A) et les deuxièmes zones partielles (C1B, C2B, C3B, C4B) des éléments de code (C1, C2, C3, C4) présentent respectivement des propriétés optiques complémentaires.

19. Dispositif de mesure de position selon l'une des revendications précédentes, **caractérisé en ce que** la longueur de période (T) de la division incrémentale périodique correspond à la longueur d'une zone partielle (C1A, ClB ; C2A, C2B ; C3A, C3B ; C4A, C4B) des éléments de code (C1, C2, C3, C4).

20. Dispositif de mesure de position selon la revendication 19, **caractérisé en ce que** plusieurs détecteurs sont disposés à l'intérieur de la période (T) pour générer respectivement un signal de balayage déphasé, par rapport au premier signal de balayage (A1) et au deuxième signal de balayage (A2), lesquels signaux sont délivrés à l'unité d'évaluation (3) afin de créer à partir de ceux-ci au moins un signal incrémental périodique déphasé par rapport au signal incrémental périodique (I1).
